# EUROPÄISCHE PATENTSCHRIFT

(11) **EP 3 427 887 B1**
(45) Veröffentlichungstag und Bekanntmachung des Hinweises auf die Patenterteilung: **11.01.2023**
(21) Anmeldenummer: 18182782.5
(22) Anmeldetag: 10.07.2018
(51) Int. Cl.: B23K 26/12, B23K 26/70, B23K 26/14, B23K 26/142, B23K 26/36

(54) **LASERBEARBEITUNGSGERÄT ZUR BEARBEITUNG EINER OBERFLÄCHE EINES WERKSTÜCKS MITTELS EINES LASERSTRAHLS**
LASER PROCESSING DEVICE FOR PROCESSING A SURFACE OF A WORKPIECE BY MEANS OF A LASER BEAM
APPAREIL D'USINAGE LASER DESTINÉ À USINER UNE SURFACE D'UNE PIÈCE À USINER À L'AIDE D'UN FAISCEAU LASER

(30) Priorität: 10.07.2017 DE 102017115361
(43) Veröffentlichungstag der Anmeldung: 16.01.2019
(73) Patentinhaber: mobil-mark GmbH, 89075 Ulm (DE)
(72) Erfinder: Baeger, Dr., Holm, 89134 Blaustein (DE); Diesterhaupt, Frank, 89075 Ulm (DE)
(74) Vertreter: Baur & Weber Patentanwälte PartG mbB

(56) Entgegenhaltungen:
- EP-A1- 3 315 241
- EP-A2- 2 564 977
- WO-A1-97/39854
- WO-A1-2013/022031
- JP-A- H11 147 187
- JP-A- 2007 021 574

## Beschreibung

Die Erfindung betrifft ein Laserbearbeitungsgerät zur Bearbeitung einer Oberfläche eines Werkstücks mittels eines Laserstrahls.

Ein Laserbearbeitungsgerät zur Bearbeitung von Werkstückoberflächen, insbesondere zur Erzeugung von Beschriftungen auf Werkstückoberflächen ist z. B. aus der DE 100 59 246 C2 bekannt. In einem im Betrieb handführbaren Gerätekopf ist ein optisches System zur Fokussierung eines Laserstrahls auf der Werkstückoberfläche und zur zweidimensionalen Schwenkung des Laserstrahls quer zur Strahlachse untergebracht. Das optische System kann insbesondere eine Fokussierlinse und eine Schwenkspiegelanordnung enthalten.

Der aus dem optischen System austretende Laserstrahl ist von einer Abdichteinheit umgeben, welche mit einer dem Gerätekopf abgewandten Anlagekante für den Bearbeitungsvorgang an die Werkstückoberfläche angelegt und gegen das Werkstück gedrückt wird. Dabei dichtet eine umlaufende gummielastische Dichtung den Innenraum der Abdichteinheit gegen das Austreten von Laserlicht und gegen das Austreten von bei der Bearbeitung anfallenden Abgasen und Partikeln ab. Der Innenraum der Glocke wird vorteilhafterweise mittels einer Gasabführeinrichtung mit Gas, welches auch Umgebungsluft sein kann, durchspült, um die genannten Abgase und Partikel unschädlich für den Benutzer abzuführen. Bei der Anlagekante sind zusätzlich mehrere Schalter einer Sicherheitsschaltereinrichtung angeordnet, welche durch ordnungsgemäßes Andrücken der Anlagekante der Abdichteinheit an die Werkstückoberfläche betätigt werden und gewährleisten, dass der Innenraum der Abdichteinheit auf Werkstückseite korrekt abgedichtet ist und dass ein richtiger Abstand der Werkstückoberfläche von dem optischen System eingestellt ist.

Ein solches Laserbearbeitungsgerät kann für unterschiedliche Werkstücke beispielsweise nach Geometrie oder Ausrichtung verschiedene Abdichthauben erfordern.

So ist aus der EP 2 564 977 A2 (Basis des Oberbegriffes des Anspruchs 1) ein für die Verwendung verschiedener Abdichthauben verbessertes Laserbearbeitungsgerät angegeben. Bei diesem Laserbearbeitungsgerät ist zwischen einem Gerätekopf und einer Abdichteinheit eine Verbindungseinheit angeordnet, welche Sicherheitsschaltereinrichtungen und zumindest einen Teil einer Gasabführeinrichtung enthält. Die Abdichteinheit ist von der Verbindungseinheit lösbar ausgebildet. Durch die Anordnung der Sicherheitsschaltereinrichtung und eines Teils der Gasabführeinrichtung in einer Verbindungseinheit zwischen der Abdichteinheit und den das optische System enthaltenden Gerätekopf kann vorteilhafterweise die Abdichteinheit selbst konstruktiv einfach gehalten sein, was bei einem System mit mehreren auswechselbaren Abdichthauben zu besonderen Kostenvorteilen und zu einer vereinfachten Handhabung beim Wechsel von Abdichthauben führt.

Aus der WO 97/39854 ist ein Verfahren zum Handgeführten Beschriften einer Oberfläche mittels Laserstrahlung bekannt, das vorsieht, dass die zu beschriftende Oberfläche mit einem Gas in Kontakt gebracht wird. Das Laserbearbeitungsgerät wird durch einen Schalter betätigt, wenn das Beschriftungsgerät vollständig auf der zu beschriftenden Oberfläche aufgesetzt wurde.

Der vorliegenden Erfindung liegt die Aufgabe zugrunde, ein verbessertes Laserbearbeitungsgerät der gattungsgemäßen Art anzugeben.

Diese Aufgabe wird durch den unabhängigen Patentanspruch 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Laserbearbeitungsgerät zur Bearbeitung einer Oberfläche eines Werkstücks mittels eines Laserstrahls angegeben, da Folgendes umfasst: einen Gerätekopf, der mit einer optischen Einheit zur Übertragung des Laserstrahls ausgebildet ist und der eine Funktionseinheit aufweist, über die eine Abgabe des Laserstrahls aktivierbar ist, eine Abdichteinheit, welche unterhalb der Funktionseinheit an dem Gerätekopf gehalten ist und an die Oberfläche des Werkstücks anlegbar ist, wenigstens eine erste Gaszuführeinrichtung und wenigstens eine erste Gasabführeinrichtung zur Spülung mit einem ersten Gas vorgesehen ist, und wenigstens einen Sicherheitssensor, der ein Andrücken der Abdichteinheit an die Oberfläche des Werkstücks zur Aktivierung der Abgabe des Laserstrahls detektiert. Zwischen der Funktionseinheit und der Abdichteinheit ist eine optisch transparente Barriere angeordnet. Die Gaszuführeinrichtung und die erste Gasabführeinrichtung sind zur Spülung mit dem ersten Gas im Bereich der Funktionseinheit vorgesehen. Eine zweite Gaszuführeinrichtung und eine zweite Gasabführeinrichtung sind zur Spülung mit einem zweiten Gas im Bereich des Inneren der Abdichteinheit vorgesehen.

Demnach wird das bisher im Stand der Technik bereits bekannte Konzept des Sicherheitsschalters zur Aktivierung eines Laserstrahls dahingehend erweitert, dass kein mechanisches Bauteil zur Detektion des Andrückens der Abdichteinheit an die Oberfläche des Werkstücks mehr benötigt wird. Vielmehr wird gemäß der Erfindung vorgeschlagen, die bisher mechanische oder elektromechanische Sicherheitsüberwachung durch einen Sicherheitssensor zu ersetzen, der eine mechanische Anpresskraft oder einen Anpressdruck detektieren kann. Die erfindungsgemäße Lösung erweist sich in der Praxis als vorteilhaft, da zum einen nun nicht nur ein digitales Signal bezüglich des Anpressens vorliegt, wie dies bei einem Schalter der Fall wäre sondern auch ein Wert für das Anpressen ableitbar ist.

Gemäß einer Ausführungsform der Erfindung weist der wenigstens eine Sicherheitssensor einen mechanischen Anpressdruck der Abdichteinheit nach, wobei der Sicherheitssensor als Magnetsensor, Drucksensor oder als Kraftsensor ausgebildet ist. Dabei ist bevorzugt zur Betätigung des Sicherheitssensors am Gerätekopf keine Relativbewegung zweier Bauteile zueinander nötig. Der Sicherheitssensor kann ein REED-Schalter, ein Hall-Sensor oder ein Piezo-Sensor sein.

Insbesondere die Verwendung von Kraft, Druck oder magnetischen Sensoren ermöglicht es, eine Sicherheitsüberwachung zu schaffen, bei der keine Relativbewegung zweier Bauteile zueinander am Gerätekopf nötig ist. Demnach wird die Gefahr eines Verkippens beim Aufsetzen des Gerätekopfs auf die Werkstückoberfläche reduziert und die Bedienung des erfindungsgemäßen Laserbearbeitungsgeräts insgesamt vereinfacht.

Gemäß der Erfindung ist zwischen der Funktionseinheit und der Abdichteinheit eine optisch transparente Barriere angeordnet.

Demnach werden der Bereich der Funktionseinheit und der Bereich der Abdichteinheit mittels der optisch transparenten Barriere insbesondere gasdicht getrennt, so dass der Laserstrahl Laserlicht auf die Werkstückoberfläche führen kann. Da die optisch transparente Barriere von der Werkstückoberfläche beabstandet ist, befindet sie sich außerhalb des Fokussierbereich des Laserstrahls, so dass diese bei Beschriftungsvorgängen keinen Schaden nimmt.

Gemäß der Erfindung sind die Gaszuführeinrichtung und die erste Gasabführeinrichtung zur Spülung mit dem ersten Gas im Bereich der Funktionseinheit und eine zweite Gaszuführeinrichtung und eine zweite Gasabführeinrichtung zur Spülung mit einem zweiten Gas im Bereich des Inneren der Abdichteinheit vorgesehen. Insbesondere umfasst die zweite Gaszuführungseinrichtung mehrere Gasauslassöffnungen, die sowohl das Volumen unterhalb der optisch transparenten Barriere als auch die optisch transparente Barriere selbst mit dem zweiten Arbeitsgas umspülen. Dabei mündet der zweite Gasauslass bevorzugt in Öffnungen, die zwischen den Öffnungen des zweiten Gaszulaufs und der Oberfläche des Werkstücks angeordnet sind, vorzugsweise unmittelbar benachbart zur Oberfläche des Werkstücks. Dabei kann zur Spülung kurzfristig das erste Gas in Bereich des Inneren der Abdichteinheit zuführbar sein, insbesondere mit höherem Druck als bei Zuführung des zweiten Gases.

Durch das Einbringen der optisch transparenten Barriere ist es nunmehr möglich, den Bereich der Funktionseinheit und den Bereich der Abdichteinheit mit unterschiedlichen Arbeitsgasen zu versorgen. So kann im Bereich der Funktionseinheit eine Zuführung beispielsweise von Luft erfolgen, so dass das dort eingebrachte Gas lediglich der Kühlung sowie der Reinigung der optischen Elemente dient. Im Bereich der Abdichteinheit kann ein anders Gas, das den Beschriftungsvorgang beeinflussen kann, eingebracht werden, wobei hier wiederum ähnlich wie bereits in bekannten Geräteköpfen mehrere Gaszuführungsöffnungen umfassseitig angeordnet sein können oder aber eine schlitzförmige Zuführung geschaffen wird. Die Gaszuführung des zweiten Gases ist dabei bevorzugt im Bereich unterhalb der optisch transparenten Barriere angeordnet, so dass wenigstens ein Teil des zweiten Gases die untere Seite der optisch transparenten Barriere umspült, so dass diese von Partikeln befreit werden kann. Vorteilhafterweise befindet sich die zweite Gasauslassöffnung in der Nähe der Werkstückoberfläche, so dass beim Beschriftungsvorgang entstehende Partikel frühzeitig der Gasabführung zugeleitet werden, ohne Verschmutzung innerhalb der Abdichteinheit bewirken zu können. Dabei kann es auch vorgesehen sein, dass durch kurzes Spülen mit Überdruck das erste Gas in den Bereich der Abdichteinheit eingeleitet wird, so dass beispielsweise zu Beginn oder während einer Pause des Beschriftungsvorgangs ein Reinigen im Bereich der Werkstückoberfläche möglich ist, so dass eventuell vorhandene Partikel durch den Spülvorgang entfernt werden.

Gemäß einer weiteren Ausführungsform der Erfindung sind mehrere Sicherheitssensoren angeordnet. Die mehreren Sicherheitssensoren können in Ecken eines Beschriftungsfeldes angeordnet sein. Dabei geben die mehreren Sicherheitssensoren bevorzugt jeweils ein Signal eines Anpressdrucks aus, so dass der Aufsetzpunkt der Abdichteinheit auf die Oberfläche des Werkstücks kontrollierbar ist.

Insbesondere bei einer nicht digitalen Auswertung der mehreren Sicherheitssensoren ergibt sich somit ein Profil des Anpressdrucks, so dass beispielsweise ein nicht korrekter Aufsetzpunkt des Gerätekopfs auf einer Oberfläche des Werkstücks eine ungleichmäßige Druckverteilung erkennbar ist. Die mehreren Sensoren werden dabei bevorzugt in weit voneinander entfernten Ecken eines Beschriftungsfelds angeordnet, so dass eine zuverlässige Kontrolle des Aufsetzpunkts möglich ist.

Gemäß einer weiteren Ausführungsform der Erfindung ist die Lichtquelle als Faserlaser, als Scheibenlaser, als Diodenlaser oder als YAG-Laser ausgebildet.

Die Erfindung lässt sich auf alle bekannte Arten von Laser anwenden, so dass je nach Anforderung unterschiedliche Lichtquellen eingesetzt werden können.

Gemäß einer weiteren Ausführungsform der Erfindung erfolgt die Bestimmung einer Verschmutzung der optisch transparenten Barriere mittels einer weiteren im Inneren der Abdichteinheit angeordneten Lichtquelle und einem im Inneren der Funktionseinheit angeordneten Lichtsensor erfolgt.

Die Transparenz der optischen Barriere kann beispielsweise mittels einer zusätzlichen Lichtquelle bestimmt werden, deren Wellenlänge so gewählt ist, dass ein auf der anderen Seite der optischen Barriere angeordneter Lichtsensor eine entsprechende Reduzierung der optischen Transparenz bestimmen kann. Vorteilhafterweise kann die zur Bestimmung der Verschmutzung verwendete Lichtquelle im Inneren der Abdichteinheit angeordnet sein und darüber hinaus mit einer Wellenlänge arbeiten, die außerhalb der Wellenlänge des Lasers liegt, um eventuelle Beeinflussung durch Laserlicht zu vermeiden.

Gemäß einer weiteren Ausführungsform der Erfindung ist über die erste Gaszuführung Luft als erstes Gas und über die zweite Gaszuführung Sauerstofffreies oder inertes Gas, insbesondere Stickstoff, als zweites Gas zuführbar.

Während Luft als erstes Gas zur Spülung und Kühlung geeignet ist, kann es insbesondere vorgesehen sein, mittels eines inerten Gases eine Schwärzung und damit optisch ansprechende Beschriftung auf der Werkstückoberfläche zu schaffen.

Gemäß einer weiteren Ausführungsform der Erfindung ist der Gerätekopf auf einer Außenseite mit einer Anzeigeeinrichtung versehen, die für einen Benutzer des Laserbearbeitungsgeräts Statusinformationen anzeigt oder die zur Eingabe von Betriebsparametern ausgebildet ist. Dabei zeigt die Anzeigeeinheit bevorzugt korrektes Aufsetzen der Abdichteinheit anhand der Sicherheitssensoren, Druckwerte im Inneren der Abdichteinheit, Druckwerte im Inneren der Funktionseinheit, Statusparameter bei einem Reinigungsvorgang oder eine Verschmutzung der optisch transparenten Barriere an.

Der Gerätekopf befindet sich üblicherweise während des Beschriftungsvorgangs im Blickfeld einer Benutzerin oder eines Benutzers, so dass über die Anzeigeeinheit Informationen übertragen werden können. So ist es beispielsweise denkbar, die oben beschriebene ungleichmäßige Druckverteilung beim Aufsetzen zur Indikation eines korrekten Aufsetzpunktes mittels einer einfachen Pfeildarstellung anzuzeigen. Andere Betriebsparameter des Laserbearbeitungsgeräts können selbstverständlich ebenfalls dargestellt werden. Dazu zählt z. B. auch die automatische Bestimmung der Verschmutzung der optischen Barriere, so dass eine Benutzerin oder ein Benutzer darauf hingewiesen wird, einen Reinigungsvorgang auszulösen. In einer Variante könnte dies auch über die Anzeigeeinheit als berührungssensitives Modul durchführbar sein.

Nachfolgend werden einige Ausführungsbeispiele anhand der Zeichnungen näher erläutert. Es zeigen:
- Fig. 1: ein erfindungsgemäßes Laserbearbeitungsgerät in einer Schrägansicht,
- Fig. 2: ein Detail des Laserbearbeitungsgeräts aus Fig. 1 in einer Schnittansicht,
- Fig. 3: eine schematische Ansicht eines Teils eines Laserbearbeitungsgeräts,
- Fig. 4: eine weitere schematische Ansicht eines Teils eines Laserbearbeitungsgeräts, und
- Fig. 5: eine weitere schematische Ansicht eines Teils eines Laserbearbeitungsgeräts.

In den Figuren sind gleiche oder funktional gleichwirkende Bauteile mit den gleichen Bezugszeichen versehen.

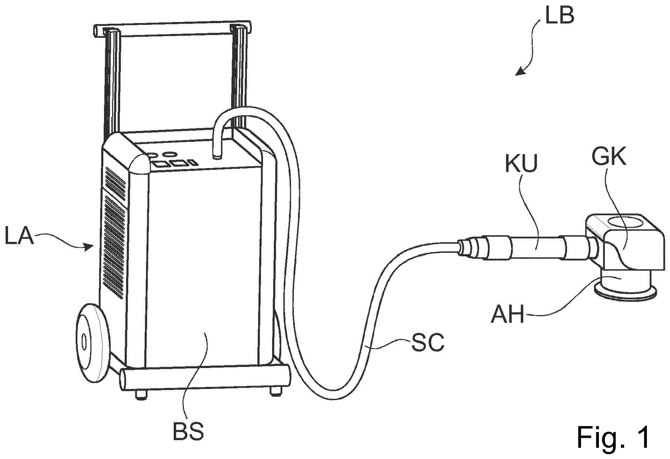

In Fig. 1 ist ein Laserbearbeitungsgerät LB gezeigt, das in einer mobilen Ausführung aus einer Basisstation BS und einem Gerätekopf GK gebildet wird. Die Verbindung zwischen Basisstation BS und Gerätekopf GK erfolgt über einen Schlauch SC, der beispielsweise über eine Kupplung KU mit dem Gerätekopf GK gekoppelt werden kann. Über den Schlauch SC erfolgt eine Versorgung des Gerätekopfs GK mit Betriebsmitteln, wozu im Inneren des Schlauchs SC elektrische und fluidführende Versorgungsleitungen angebracht sind. Die Basisstation BS weist darüber hinaus auf einer Gehäuseseite einen Luftauslass LA auf.

Der Gerätekopf GK ist mit einer Abdichteinheit AH versehen, so dass über die Abdichteinheit AH der Gerätekopf GK auf eine Werkstückoberfläche angelegt werden kann. Durch Aufsetzen des Gerätekopfs GK auf die Werkstückoberfläche wird die Laserbearbeitung aktiviert. Ein derartiger Aufbau ist an sich aus dem Stand der Technik bekannt. Für die Erfindung relevant ist jedoch die Zuführung bzw. Abführung von gasförmigen Betriebsmitteln über den Schlauch SC, wie nachfolgend detaillierter erläutert werden wird. Im Inneren des Schlauchs SC können zwischen Basisstation BS und Gerätekopf GK eine erste Schlauchleitung und eine zweite Schlauchleitung vorgesehen sein. Demnach ist es möglich, unterschiedliche Gase an den Gerätekopf zu führen. Weitere elektrische Versorgungsleitungen werden ebenfalls im Inneren des Schlauchs SC geführt, diese sind aber zur Verdeutlichung nicht eingezeichnet. Der verbleibende Freiraum im Inneren des Schlauchs SC dient ebenfalls als Zuführung von Gas, beispielsweise als Luftzuführung.

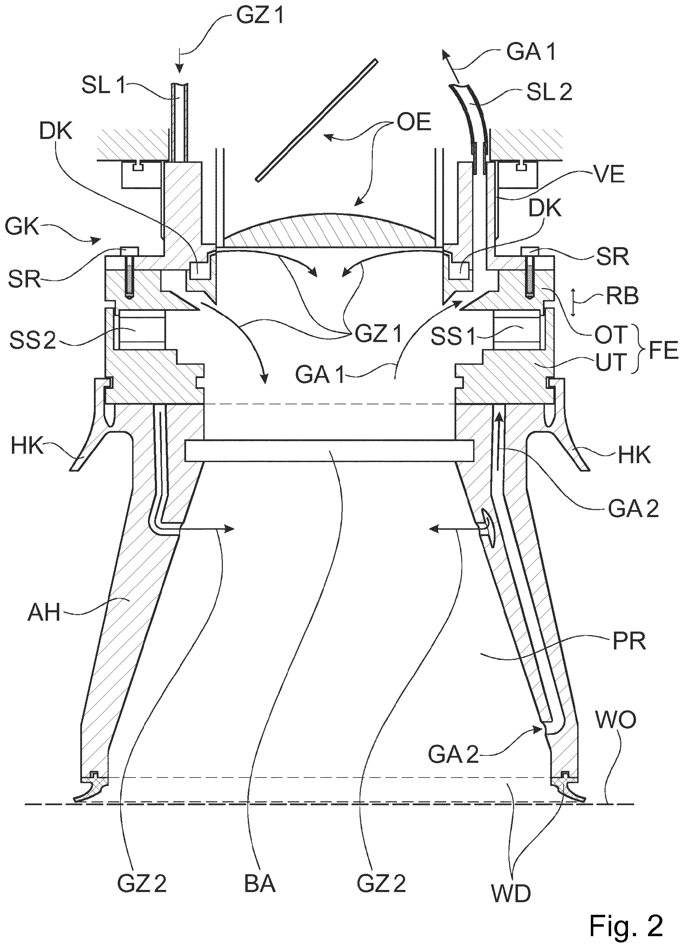

In Fig. 2 ist schematisch ein Schnitt durch den Gerätekopf GK mit der Abdichteinheit AH gezeigt. Dabei ist der Gerätekopf GK, der insbesondere laseraktive Elemente, Steuerungselektronik, Bedienelemente und dergleichen enthalten kann, lediglich angedeutet. In dem Gerätekopf GK ist vorteilhafterweise ein optisches System mit optischen Einheiten OE vorgesehen, die beispielsweise in Form eines gesteuert kippbaren Kippspiegels zur Strahlumlenkung und als Fokussierlinse zum Fokussieren eines Laserstrahls auf eine Werkstückoberfläche WO enthalten können. Ein Laserbearbeitungsgerät LB mit einem derartigen Gerätekopf GK ist an sich aus dem Stand der Technik bekannt.

Der durch den Laserstrahl zu bearbeitende Flächenbereich der Werkstückoberfläche WO ist im Betrieb des Laserbearbeitungsgeräts LB durch eine Abdichteinheit AH seitlich abgeschlossen. An der der Werkstückoberfläche WO zuweisenden Anlagekante der Abdichteinheit AH kann vorteilhafterweise eine weichelastische umlaufende Ringdichtung WD vorgesehen sein. Die Abdichteinheit AH umgibt somit einen Prozessraum PR oberhalb der Werkstückoberfläche WO und begrenzt diesen seitlich.

Der Gerätekopf GK weist darüber hinaus eine Funktionseinheit FE auf, die als Bestendteil aus einem Oberteil OT und einem relativ zu diesem verschiebbaren Unterteil UT gebildet wird, das mit der Abdichteinheit AH verbunden sein kann. Das Oberteil OT kann gegen das Unterteil UT geringfügig in axialer Richtung verschiebbar sein, wie durch die Relativbewegung RB in Fig. 2 angedeutet ist. Zwischen dem Oberteil OT und dem Unterteil UT sind zumindest ein erster Sicherheitssensor SS1 angebracht, der das Aufsetzen des Gerätekopfes GK auf der Werkstückoberfläche WO detektieren kann, um einen Beschriftungsvorgang oder dergleichen auszulösen.

Der Bereich des Gerätekopfes GK unterhalb der optischen Einheit OE ist entsprechend der Erfindung von der Abdichteinheit AH mittels einer optisch transparenten Barriere BA abgetrennt. Die optisch transparente Barriere BA ist dabei so ausgeführt, dass sie das über die optische Einheit OE abgegebene Laserlicht mit hoher Transparenz in Richtung der Werkstückoberfläche WO durchlässt. Die optisch transparente Barriere BA kann dabei den unteren Abschluss am Unterteil UT bilden oder aber, wie in Fig. 2 gezeigt ist, am oberen Ende der Abdichteinheit AH angeordnet sein.

Durch die Verwendung der optisch transparenten Barriere BA und entsprechend der Erfindung ist es möglich, das Volumen zwischen der Barriere BA und der optischen Einheit OE sowie zwischen der Barriere BA und der Werkstückoberfläche WO mit unterschiedlichen Gasen zu füllen. Dazu sind in den Seitenwänden des Gerätekopfes unterschiedliche Kanäle ausgebildet, die, wie oben erwähnt, über den Schlauch SC mit der Basisstation BS verbunden werden können.

Im Bereich des Oberteils OT der Funktionseinheit FE wird eine erste Gaszuführung GZ1 gezeigt, die über eine erste Schlauchleitung SL1 an den Schlauch SC anschließbar ist. Die erste Gaszuführung GZ1 gibt dabei ein erstes Arbeitsgas im Wesentlichen in den Raum unterhalb der optischen Einheit OE in Richtung der optisch transparenten Barriere BA ab. Die erste Schlauchleitung SL1 ist über nicht in Fig. 2 dargestellten Kanälen auch mit Druckkammern DK in Verbindung stehend, so dass die erste Gaszufuhr GZ1 auch unterhalb der als Sammellinse ausgebildeten optischen Einheit OE erfolgt. Dabei können die Auslassöffnungen an den Druckkammern DK ringförmig oder als eine Vielzahl von nebeneinander angeordneten Öffnungen ausgestaltet sein. Eine erste Gasabführung GA1 ist ebenfalls im Bereich des Oberteils OT der Funktionseinheit FE vorgesehen, so dass eine Rückführung des ersten Gases über eine zweite Schlauchleitung SL2 erfolgen kann.

Das Volumen unterhalb der optisch transparenten Barriere BA wird auf vergleichbare Weise über eine zweite Gaszuführung GZ2 mit einem zweiten Gas gefüllt, wobei hier ähnlich wie im Zusammenhang mit den Druckkammern DK der ersten Gaszuführung GZ1 erläutert, auch eine ringförmige Verteilung des zweiten Gases erfolgen kann. Die zweite Gasabführung GA2 erfolgt in der Nähe der Werkstückoberfläche WO, wobei sowohl die zweite Gaszuführung GZ2 als auch die zweite Gasabführung GA2 mit entsprechenden Schlauchleitungen verbunden sind, die jedoch aus Gründen der besseren Übersichtlichkeit nicht in Fig. 2 eingezeichnet sind. Die zweite Gaszuführung GZ2 und die zweite Gasabführung GA2 enden daher nicht im Bereich des Übergangs der Abdichteinheit AH und des Unterteils UT sondern werden über nicht dargestellte Kanäle an der optischen Einheit OE analog zur ersten Gaszuführung GZ1 und ersten Gasabführung GA1 vorbeigeführt. Im Unterschied zu bisher bekannten Abdichteinheiten ist hier ein hohlwandiger Aufbau vorgesehen, so dass das zweite Gas im Bereich oberhalb der Werkstückoberfläche in den entsprechenden Bereich eingebracht werden kann. Die zweite Gaszuführung GZ2 sorgt dabei für eine Spülung der Unterseite der optisch transparenten Barriere BA, so dass eventuelle Partikel, die bei der Beschriftung mit einem Laserstrahl im Bereich der Werkstückoberfläche WO erzeugt werden, nicht an der optisch transparenten Barriere BA abgelagert werden können, sondern vielmehr über die zweite Gasabführung GA2 aus dem Volumen oberhalb der Werkstückoberfläche WO abgeführt werden.

Entsprechend der Erfindung ist es möglich, eine unabhängige Gasversorgung mit unterschiedlichen Gasen für die Funktionseinheit FE bzw. Gerätekopf GK und Abdichteinheit AH vorzusehen.

Dabei kann das Gas oder Gasgemisch im Bereich der Abdichteinheit AH Sauerstofffrei sein oder als ein inertes Gas oder Gasgemisch, insbesondere Stickstoff, Argon oder dergleichen, bereitgestellt sein. Insbesondere Stickstoff als inertes Gas ermöglicht es, die ansonsten auftretende bräunliche Verfärbung bei Laserbeschriften einer metallischen Oberfläche durch eine oxidfreie Prozessführung so abzuändern, dass eine nahezu schwarze Oberfläche beim Laserbeschriften erreicht werden kann. Insbesondere werden Stahloberflächen beim Laserbeschriften unter einer Stickstoffatmosphäre wesentlich weniger anfällig bezüglich Korrosion, was bei hygienesensiblen Branchen oftmals den Einsatz von Laserbeschriftungen verunmöglicht. Darüber hinaus ist auch die optische Ausgestaltung bei korrodierten Beschriftungsflächen oftmals störend und sollte daher vermieden werden. Aufgrund des geringen Prozessvolumens ist der Bereich oberhalb der Werkstückoberfläche WO zügig mit einer Stickstoffatmosphäre zu versehen.

Für das andere Gas oder Gasgemisch im Bereich der Funktionseinheit FE kann Luft beispielsweise zur Kühlung verwendet werden. Aus Kostengründen bietet es sich an, hier mit Umgebungsluft zu arbeiten, was geringe Anforderungen an die verwendeten Komponenten des erfindungsgemäßen Laserbearbeitungsgeräts stellt.

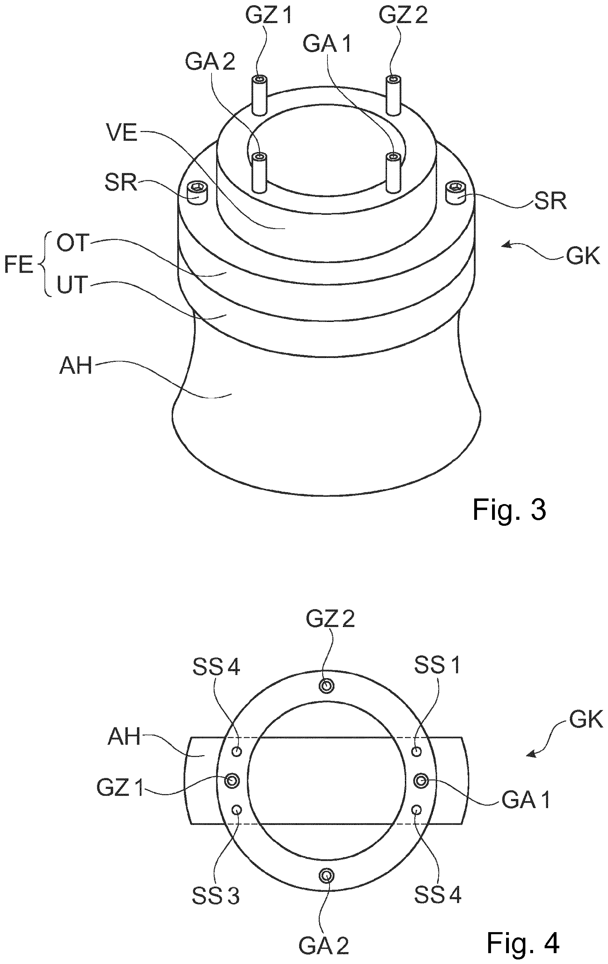

Der Aufbau des Gerätekopfes GK erfolgt aus mehreren Einzelelementen, wie in Fig. 3 nochmals dargestellt ist. In Fig. 3 ist der Gerätekopf GK in einer perspektivischen Seitenansicht dargestellt. Man erkennt, dass ausgehend von der Abdichteinheit AH die Funktionseinheit FE angeordnet ist, die aus dem Oberteil OT und dem Unterteil UT hergestellt sein kann. Das Oberteil OT ist mit einer Verbindungseinheit VE beispielsweise mittels Schrauben SR verbunden. Auf der der Abdichteinheit AH abgewandten Seite befinden sich die Gaszu- bzw. - abführungen GZ1, GZ2, GA1 und GA2. Man erkennt, dass ein derartiger Aufbau eine kompakte Realisierung eines Gerätekopfes GK ermöglicht.

In Fig. 4 ist ein Gerätekopf GK in einer Draufsicht gezeigt. Hierbei wird eine Abdichteinheit AH verwendet, die mit einem eckförmigen Querschnitt ausgebildet ist. Eine derartige Dimensionierung der Abdichteinheit AH ist bei der Laserbeschriftung üblich. Zusätzlich zu der Lage der Abdichteinheit AH ist die Lage von vier Sicherheitssensoren SS1, SS2, SS3 und SS4 eingezeichnet.

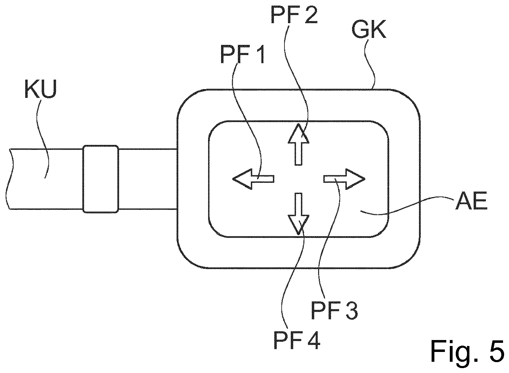

Jede der vier Sicherheitssensoren SS1 bis SS4 wird an eine entsprechende Recheneinheit signalgebend verbunden. Somit ist es möglich, beim Aufsetzen der Abdichteinheit AH auf eine Werkstückoberfläche WO für jede der vier Sicherheitssensoren SS1 bis SS4 eine Anpresskraft oder einen Anpressdruck zu bestimmen. Die Auswertung der Sensorsignale kann insbesondere dafür verwendet werden, das korrekte Aufsetzen der Abdichteinheit AH vollautomatisch überwachen zu können. Sollte beispielsweise die Abdichteinheit AH gekippt oder leicht verkantet aufgesetzt werden, wäre die Druckbelastung an den vier Sicherheitssensoren SS1 bis SS4 ungleichmäßig, so dass eine Freischaltung der Laserquelle nicht erfolgen würde. In der einfachsten Ausführungsform würde daher lediglich das korrekte Aufsetzen der Abdichteinheit AH durch die Sicherheitssensoren SS1 bis SS4 bestimmt werden. Es ist jedoch auch möglich, beispielsweise an einer Anzeigeeinheit (siehe unten in Bezug auf Fig. 5) einem Benutzer zu signalisieren, in welche Richtung die Lage des Aufsetzens des Gerätekopfes GK korrigiert werden müsste, um ein korrektes Aufsetzen zu erreichen.

Die Sicherheitssensoren SS1 bis SS4 sind dabei so ausgestaltet, dass zum Bestimmen des mechanischen Anpressens lediglich ein geringer axialer Hub zwischen Oberteil und Unterteil erforderlich ist. In anderen Ausführungsformen wäre es auch möglich, die Sicherheitssensoren SS1 bis SS4 im Bereich des Übergangs von Oberteil OT und Verbindungseinheit VE anzuordnen. Wichtig ist hier, dass aufgrund der lediglich geringen Relativbewegung RB kein Verkippen von Oberteil OT zu Unterteil UT erfolgen kann. Das mechanische Anpressen kann mit unterschiedlichen Arten von Sensoren detektiert werden. Neben magnetischen Sensoren (beispielsweise ein REED-Sensor oder -Schalter) sind auch Druck- oder Kraftsensoren (beispielsweise ein PIEZO-Sensor) denkbar, die auf unterschiedliche Weise in den Gerätekopf integriert werden können.

In Bezug auf Fig. 5 wird nun der Gerätekopf GK mit einer Anzeigeeinheit AE gezeigt, die von einem Benutzer oder einer Benutzerin des Laserbearbeitungsgerätes LB für unterschiedliche Zwecke herangezogen werden kann. Dazu ist der Gerätekopf GK auf einer Außenseite mit der Anzeigeeinheit AE versehen ist, die sowohl Statusinformationen anzeigen oder die zur Eingabe von Betriebsparametern ausgebildet sein kann. Die Anzeigeeinheit AE kann ein korrektes Aufsetzen der Abdichteinheit AH anhand der Sicherheitssensoren SS1 bis SS4 anzeigen, wie mit den Pfeilen PF1 bis PF4 in Fig. 5 angedeutet. Die einzelnen Pfeile PF1 bis PF4 zeigen dabei an, in welche Richtung eine Korrektur erfolgen muss, um ein korrektes Aufsetzen des Gerätekopfs GK zu erreichen.

In anderen Ausführungen können Druckwerte im Inneren der Abdichteinheit AH, Druckwerte im Inneren der Funktionseinheit FE, Statusparameter bei einem Reinigungsvorgang oder eine Verschmutzung der optisch transparenten Barriere BA angezeigt werden.

Insbesondere für die Bestimmung der Verschmutzung der optisch transparenten Barriere BA kann es erforderlich sein, weitere Komponenten in den Gerätekopf GK zu integrieren. So kann beispielsweise eine Bestimmung der Verschmutzung mittels einer weiteren im Inneren der Abdichteinheit AH angeordneten Lichtquelle und einem im Inneren der Funktionseinheit FE angeordneten Lichtsensor erfolgen.

Zur Reinigung der optisch transparenten Barriere BA kann kurzfristig das erste Gas (Luft) mit hohem Druck auch über die zweite Gaszuführung GZ2 eingeströmt werden, um die Unterseite der optisch transparenten Barriere BA zu reinigen, in dem sich dort abgelagerte Partikel entfernt werden.

### Liste der Bezugszeichen:

- AE: Anzeigeeinheit
- AH: Abdichteinheit
- BA: optisch transparente Barriere
- BS: Basisstation
- DK: Druckkammer
- FE: Funktionseinheit
- GA1, GA2: Gasabführung
- GK: Gerätekopf
- GZ1, GZ2: Gaszuführung
- KU: Kupplung
- LA: Luftauslass
- LB: Laserbearbeitungsgerät
- OE: optische Einheit
- OT: Oberteil
- PF1,.., PF4: Pfeile
- PR: Prozessraum
- RB: Relativbewegung
- SC: Schlauch
- SL1, SL2: Schlauchleitung
- SR: Schraube
- SS1,..., SS4: Sicherheitssensoren
- UT: Unterteil
- VE: Verbindungseinheit
- WD: Ringdichtung
- WO: Werkstückoberfläche

## Patentansprüche

1. Laserbearbeitungsgerät zur Bearbeitung einer Oberfläche eines Werkstücks (WO) mittels eines Laserstrahls, umfassend:
- einen Gerätekopf (GK), der mit einer optischen Einheit (OE) zur Übertragung des Laserstrahls ausgebildet ist und der eine Funktionseinheit (FE) aufweist, über die eine Abgabe des Laserstrahls aktivierbar ist,
- eine Abdichteinheit (AH), welche unterhalb der Funktionseinheit (FE) an dem Gerätekopf (GK) gehalten ist und an die Oberfläche des Werkstücks (WO) anlegbar ist,
- wenigstens eine erste Gaszuführeinrichtung (GZ1) und wenigstens eine erste Gasabführeinrichtung (GA1) zur Spülung mit einem ersten Gas vorgesehen ist, und
- wenigstens einen Sicherheitssensor (SS1,..., SS4), der ein Andrücken der Abdichteinheit (AH) an die Oberfläche des Werkstücks (WO) zur Aktivierung der Abgabe des Laserstrahls detektiert,
**dadurch gekennzeichnet, dass**
zwischen der Funktionseinheit (FE) und der Abdichteinheit (AH) eine optisch transparente Barriere (BA) angeordnet ist und die Gaszuführeinrichtung (GZ1) und die erste Gasabführeinrichtung (GA1) zur Spülung mit dem ersten Gas im Bereich der Funktionseinheit (FE) vorgesehen sind und eine zweite Gaszuführeinrichtung (GZ2) und eine zweite Gasabführeinrichtung (GA2) zur Spülung mit einem zweiten Gas im Bereich des Inneren der Abdichteinheit (AH) vorgesehen sind.

2. Laserbearbeitungsgerät nach Anspruch 1, bei dem der Sicherheitssensor (SS1,..., SS4) einen mechanischen Anpressdruck der Abdichteinheit nachweist, wobei der Sicherheitssensor (SS1,..., SS4) als Magnetsensor, Drucksensor oder als Kraftsensor ausgebildet ist.

3. Laserbearbeitungsgerät nach Anspruch 1 oder 2, bei dem zur Betätigung des Sicherheitssensors (SS1,..., SS4) keine Relativbewegung (RB) zweier Bauteile des Gerätekopf (GK) zueinander nötig ist.

4. Laserbearbeitungsgerät nach Anspruch 2, bei dem der Sicherheitssensor (SS1,..., SS4) ein REED-Schalter oder ein Piezo-Sensor ist.

5. Laserbearbeitungsgerät nach einem der Ansprüche 1 bis 4, bei dem die zweite Gaszuführungseinrichtung (GZ2) mehrere Gasauslassöffnungen umfasst, die sowohl das Volumen unterhalb der optisch transparenten Barriere (BA) als auch die optisch transparente Barriere (BA) selbst mit dem zweiten Arbeitsgas umspülen.

6. Laserbearbeitungsgerät nach einem der Ansprüche 1 bis 5, bei dem der zweite Gasauslass (GA2) in Öffnungen mündet, die zwischen den Öffnungen des zweiten Gaszulaufs (GZ2) und der Oberfläche des Werkstücks (WO) angeordnet sind, vorzugsweise unmittelbar benachbart zur Oberfläche des Werkstücks (WO).

7. Laserbearbeitungsgerät nach einem der Ansprüche 1 bis 6, bei dem zur Spülung das erste Gas in Bereich des Inneren der Abdichteinheit (AH) zuführbar ist, insbesondere mit höherem Druck als die Zuführung des zweiten Gases.

8. Laserbearbeitungsgerät nach einem der Ansprüche 1 bis 7, bei dem mehrere Sicherheitssensoren (SS1,..., SS4) angeordnet sind.

9. Laserbearbeitungsgerät nach Anspruch 8, bei dem die mehreren Sicherheitssensoren (SS1,..., SS4) in Ecken eines Beschriftungsfeldes angeordnet sind.

10. Laserbearbeitungsgerät nach Anspruch 8 oder 9, bei dem die mehreren Sicherheitssensoren (SS1,..., SS4) jeweils ein Signal eines Anpressdrucks ausgeben, so dass der Aufsetzpunkt der Abdichteinheit (AH) auf die Oberfläche des Werkstücks (WO) kontrollierbar ist.

11. Laserbearbeitungsgerät nach einem der Ansprüche 1 bis 10, bei dem die Lichtquelle als Faserlaser, als Scheibenlaser, als Diodenlaser oder als YAG-Laser ausgebildet ist.

12. Laserbearbeitungsgerät nach einem der Ansprüche 1 bis 11, bei dem die Bestimmung einer Verschmutzung der optisch transparenten Barriere (BA) mittels einer weiteren im Inneren der Abdichteinheit (AH) angeordneten Lichtquelle und einem im Inneren der Funktionseinheit (FE) angeordneten Lichtsensor erfolgt.

13. Laserbearbeitungsgerät nach einem der Ansprüche 1 bis 12, bei dem über die erste Gaszuführung (GZ1) Luft als erstes Gas und über die zweite Gaszuführung (GZ2) Sauerstofffreies oder inertes Gas, insbesondere Stickstoff, als zweites Gas zuführbar ist.

14. Laserbearbeitungsgerät nach einem der Ansprüche 1 bis 13, bei dem der Gerätekopf (GK) auf einer Außenseite mit einer Anzeigeeinrichtung (AE) versehen ist, die einem Benutzer des Laserbearbeitungsgerät (LB) Statusinformationen anzeigt oder die zur Eingabe von Betriebsparametern ausgebildet ist.

15. Laserbearbeitungsgerät nach Anspruch 14, bei dem die Anzeigeeinheit (AE) korrektes Aufsetzen der Abdichteinheit (AH) anhand der Sicherheitssensoren (SS1,..., SS4) anzeigt, Druckwerte im Inneren der Abdichteinheit (AH), Druckwerte im Inneren der Funktionseinheit (FE), Statusparameter bei einem Reinigungsvorgang oder eine Verschmutzung der optisch transparenten Barriere (BA) anzeigt.

## Claims

1. Laser working device for working a surface of a workpiece (WO) by means of a laser beam, comprising:
- a device head (GK), which has an optical unit (OE) for transmitting the laser beam and which has a functional unit (FE) via which emission of the laser beam can be activated,
- a sealing unit (AH), which is held below the functional unit (FE) on the device head (GK) and can be placed on the surface of the workpiece (WO),
- at least one first gas supply device (GZ1) and at least one first gas discharge device (GA1) is provided for flushing with a first gas, and
- at least one safety sensor (SS1,..., SS4), which detects the sealing unit (AH) pressing against the surface of the workpiece (WO) to activate the emission of the laser beam,
**characterized in that**
an optically transparent barrier (BA) is arranged between the functional unit (FE) and the sealing unit (AH) and the gas supply device (GZ1) and the first gas discharge device (GA1) are provided for flushing with the first gas in the region of the functional unit (FE) and a second gas supply device (GZ2) and a second gas discharge device (GA2) are provided for flushing with a second gas in the region of the interior of the sealing unit (AH).

2. Laser working device according to claim 1, in which the safety sensor (SS1,..., SS4) detects a mechanical contact pressure of the sealing unit, the safety sensor (SS1,..., SS4) being designed as a magnetic sensor, pressure sensor or as a force sensor.

3. Laser working device according to either claim 1 or claim 2, in which a relative movement (RB) of two components of the device head (GK) with respect to one another is not necessary to actuate the safety sensor (SS1,..., SS4).

4. Laser working device according to claim 2, in which the safety sensor (SS1,..., SS4) is a REED switch or a piezo sensor.

5. Laser working device according to any of claims 1 to 4, in which the second gas supply device (GZ2) comprises a plurality of gas outlet openings which flush both the volume below the optically transparent barrier (BA) and the optically transparent barrier (BA) itself with the second working gas.

6. Laser working device according to any of claims 1 to 5, in which the second gas outlet (GA2) opens into openings which are arranged between the openings of the second gas inlet (GZ2) and the surface of the workpiece (WO), preferably immediately adjacent to the surface of the workpiece (WO).

7. Laser working device according to any of claims 1 to 6, in which, for flushing, the first gas can be supplied in the region of the interior of the sealing unit (AH), in particular at a higher pressure than the supply of the second gas.

8. Laser working device according to any of claims 1 to 7, in which a plurality of safety sensors (SS1,..., SS4) are arranged.

9. Laser working device according to claim 8, in which the plurality of safety sensors (SS1,..., SS4) are arranged in corners of an inscription field.

10. Laser working device according to either claim 8 or claim 9, in which the plurality of safety sensors (SS1,..., SS4) each output a signal of a contact pressure, so that the contact point of the sealing unit (AH) on the surface of the workpiece (WO) can be checked.

11. Laser working device according to any of claims 1 to 10, in which the light source is in the form of a fiber laser, a disk laser, a diode laser or a YAG laser.

12. Laser working device according to any of claims 1 to 11, in which contamination of the optically transparent barrier (BA) is determined by means of a further light source arranged inside the sealing unit (AH) and a light sensor arranged inside the functional unit (FE).

13. Laser working device according to any of claims 1 to 12, in which air can be supplied as the first gas via the first gas supply (GZ1) and oxygen-free or inert gas, in particular nitrogen, can be supplied as the second gas via the second gas supply (GZ2).

14. Laser working device according to any of claims 1 to 13, in which an outer side of the device head (GK) is provided with a display device (AE), which displays status information to a user of the laser working device (LB) or which is designed to input operating parameters.

15. Laser working device according to claim 14, in which the display unit (AE) displays: correct placement of the sealing unit (AH) using the safety sensors (SS1,..., SS4); pressure values inside the sealing unit (AH); pressure values inside the functional unit (FE); status parameters during a cleaning process; or contamination of the optically transparent barrier (BA).

## Revendications

1. Appareil d'usinage au laser permettant d'usiner une surface d'une pièce (WO) au moyen d'un faisceau laser, comprenant :
- une tête d'appareil (GK), laquelle est conçue avec une unité optique (OE) pour la transmission du faisceau laser et laquelle comporte une unité fonctionnelle (FE) par l'intermédiaire de laquelle l'émission du faisceau laser peut être activée,
- une unité d'étanchéité (AH), laquelle est maintenue en dessous de l'unité fonctionnelle (FE) sur la tête d'appareil (GK) et peut être placée sur la surface de la pièce (WO),
- au moins un premier dispositif d'alimentation en gaz (GZ1) et au moins un premier dispositif d'évacuation de gaz (GA1) sont fournis pour le rinçage à l'aide d'un premier gaz, et
- au moins un capteur de sécurité (SS1,..., SS4), lequel détecte un appui de l'unité d'étanchéité (AH) sur la surface de la pièce (WO) pour l'activation de l'émission du faisceau laser,
**caractérisé en ce que**
entre l'unité fonctionnelle (FE) et l'unité d'étanchéité (AH), une barrière (BA) optiquement transparente est disposée et le dispositif d'alimentation en gaz (GZ1) et le premier dispositif d'évacuation de gaz (GA1) sont fournis pour le rinçage à l'aide du premier gaz dans la zone de l'unité fonctionnelle (FE) et un second dispositif d'alimentation en gaz (GZ2) et un second dispositif d'évacuation de gaz (GA2) sont fournis pour le rinçage à l'aide d'un second gaz dans la zone de l'intérieur de l'unité d'étanchéité (AH).

2. Appareil d'usinage au laser selon la revendication 1, selon lequel le capteur de sécurité (SS1,..., SS4) détecte une pression de contact mécanique de l'unité d'étanchéité, dans lequel le capteur de sécurité (SS1,..., SS4) est sous la forme de capteur magnétique, de capteur de pression ou de capteur de force.

3. Appareil d'usinage au laser selon la revendication 1 ou 2, selon lequel, pour l'actionnement du capteur de sécurité (SS1,..., SS4), aucun mouvement relatif (RB) de deux parties de la tête d'appareil (GK) l'une par rapport à l'autre n'est nécessaire.

4. Appareil d'usinage au laser selon la revendication 2, selon lequel le capteur de sécurité (SS1,..., SS4) est un interrupteur REED ou un capteur piézoélectrique.

5. Appareil d'usinage au laser selon l'une quelconque des revendications 1 à 4, selon lequel le second dispositif d'alimentation en gaz (GZ2) comprend multiples ouvertures de sortie de gaz, lesquelles rincent le volume en dessous de la barrière (BA) optiquement transparente et la barrière (BA) optiquement transparente elle-même à l'aide du second gaz de travail.

6. Appareil d'usinage au laser selon l'une quelconque des revendications 1 à 5, selon lequel la seconde sortie de gaz (GA2) débouche dans des ouvertures, lesquelles sont disposées entre les ouvertures de la seconde entrée de gaz (GZ2) et la surface de la pièce (WO), de préférence immédiatement adjacentes à la surface de la pièce (WO).

7. Appareil d'usinage au laser selon l'une quelconque des revendications 1 à 6, selon lequel, pour le rinçage, le premier gaz peut être amené dans la zone de l'intérieur de l'unité d'étanchéité (AH), en particulier à une pression supérieure à la pression de l'amenée du second gaz.

8. Appareil d'usinage au laser selon l'une quelconque des revendications 1 à 7, selon lequel les multiples capteurs de sécurité (SS1,..., SS4) sont disposés.

9. Appareil d'usinage au laser selon la revendication 8, selon lequel les multiples capteurs de sécurité (SS1,..., SS4) sont disposés dans des coins d'un champ d'inscription.

10. Appareil d'usinage au laser selon la revendication 8 ou 9, selon lequel les multiples capteurs de sécurité (SS1,..., SS4) émettent respectivement un signal d'une pression de contact de telle sorte que le point d'appui de l'unité d'étanchéité (AH) sur la surface de la pièce (WO) peut être commandé.

11. Appareil d'usinage au laser selon l'une quelconque des revendications 1 à 10, selon lequel la source lumineuse est conçue sous la forme de laser à fibre, de laser à disque, de laser à diode ou de laser YAG.

12. Appareil d'usinage au laser selon l'une quelconque des revendications 1 à 11, selon lequel la détermination de l'encrassement de la barrière (BA) optiquement transparente s'effectue au moyen d'une autre source lumineuse disposée dans l'intérieur de l'unité d'étanchéité (AH) et d'un capteur de lumière disposé dans l'intérieur de l'unité fonctionnelle (FE).

13. Appareil d'usinage au laser selon l'une quelconque des revendications 1 à 12, selon lequel, par l'intermédiaire de la première alimentation en gaz (GZ1), de l'air peut être amené comme premier gaz et, par l'intermédiaire de la seconde alimentation en gaz (GZ2), un gaz exempt d'oxygène ou inerte, en particulier de l'azote, peut être amené comme second gaz.

14. Appareil d'usinage au laser selon l'une quelconque des revendications 1 à 13, selon lequel la tête d'appareil (GK) est fournie sur un côté extérieur d'un dispositif d'affichage (AE), lequel affiche des informations d'état à un utilisateur de l'appareil d'usinage au laser (LB) ou lequel est conçu pour saisir des paramètres de fonctionnement.

15. Appareil d'usinage au laser selon la revendication 14, selon lequel l'unité d'affichage (AE) affiche l'appui correct de l'unité d'étanchéité (AH) en fonction des capteurs de sécurité (SS1,..., SS4) et affiche des valeurs de pression dans l'intérieur de l'unité d'étanchéité (AH), des valeurs de pression dans l'intérieur de l'unité fonctionnelle (FE), des paramètres d'état lors d'un processus de nettoyage ou un encrassement de la barrière (BA) optiquement transparente.
